# EUROPEAN PATENT APPLICATION

(11) **EP 4 429 395 A1**
(43) Date of publication of application: **11.09.2024**
(21) Application number: 24161758.8
(22) Date of filing: 06.03.2024
(51) Int. Cl.: H04W 76/18, H04W 4/90, H04W 60/00, H04W 60/06, H04W 76/50

(54) **UE BEHAVIOR FOR EMERGENCY SERVICE FAILURE DUE TO LOWER LAYER FAILURE**

(30) Priority: 08.03.2023 IN 202321015439; 28.04.2023 IN 202321030700; 22.02.2024 US 202418583916
(71) Applicant: MediaTek Singapore Pte. Ltd., Singapore 138628 (SG)
(72) Inventor: MOISANEN, Matti, Oulu (FI); PUNEET, Bengaluru (IN)
(74) Representative: Hoefer & Partner Patentanwälte mbB

(57) **Abstract**

Solutions pertaining to user equipment, UE, behavior for UE behavior for emergency services failure due to lower layer failure are proposed. An apparatus implemented in a UE determines that a lower layer failure occurred during a mobility and periodic registration update, MRU, procedure or a service request, SR, procedure being performed for initiating an emergency protocol data unit, PDU, session with a network for establishing an emergency call (320). In response to the determining, the apparatus performs one or more operations comprising a UE non-access stratum, NAS, layer in a 5th Generation Mobility Management, 5GMM, protocol stack informing one or more upper layers of the 5GMM protocol stack of a failure of the MRU or SR procedure for accessing the network such that an upper layer of the 5GMM protocol stack initiates a mechanism for remedying the failure, or performing a local de-registration and attempting to initiate an initial registration for emergency services with the network (320).

## Description

### CROSS REFERENCE TO RELATED PATENT APPLICATION(S)

The present disclosure is part of a non-provisional application claiming the priority benefit of Indian Patent Application No. 202321030700, filed 28 April 2023, the content of which herein being incorporated by reference in its entirety.

### TECHNICAL FIELD

The present disclosure is generally related to mobile communications and, more particularly, to user equipment (UE) behavior for emergency services failure.

### BACKGROUND

Under the current 3GPP specification, the 5th Generation Mobility Management (5GMM) registration procedure for mobility registration and periodic update (MRU) or service request (SR) procedures for initiating an emergency protocol data unit (PDU) session specifies that an MRU or SR procedure may be performed to initiate an emergency PDU session with a network for establishing an emergency call. Furthermore, 3GPP TS24.501, section 5.5.1.3.7, titled "Abnormal Cases in the UE", specifies some procedures that a UE should perform in the event of abnormal cases during such procedures, such as a lower layer failure. For example, 3GPP TS24.501, section 5.5.1.3.7(e) specifies that in the event of a lower layer failure, in which release of the non-access-stratum (NAS) signaling connection received from lower layers or the lower layers indicate that the radio resource control (RRC) connection has been suspended without a cell change before the REGISTRATION ACCEPT or REGISTRATION REJECT message is received, the UE should abort the registration procedure and proceed as follows: (1) timer T3510 shall be stopped if still running; (2) if the registration procedure is not for initiating an emergency PDU session, the registration attempt counter shall be incremented, unless it was already set to 5; (3) If the registration attempt counter is equal to 5, the UE shall start timer T3502 and set the 5GS update status to 5U2 NOT UPDATED, and the UE shall delete the list of equivalent PLMNs (if any) and shall change to state 5GMM-REGISTERED.ATTEMPTING-REGISTRATION-UPDATE or optionally to 5GMM-REGISTERED.PLMN-SEARCH in order to perform a public land mobile network (PLMN) selection, standalone non-public network (SNPN) selection, or SNPN selection for onboarding services according to 3GPP TS 23.122 [5].

Nevertheless, the current 3GPP specification does not comprehensively outline the procedures a UE should follow during such a lower layer failure. Therefore, there is a need for solutions that more clearly specify UE behavior in the event of emergency service failure due to lower layer failure.

### SUMMARY

The following summary is illustrative only and is not intended to be limiting in any way. That is, the following summary is provided to introduce concepts, highlights, benefits, and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

An objective of the present disclosure is to propose solutions or schemes that address the issue(s) described herein. More specifically, various schemes proposed in the present disclosure are believed to provide solutions pertaining to UE behavior for emergency services failure due to lower layer failure. Methods according to the invention are defined in the independent claims. The dependent claims define preferred embodiments thereof.

In one aspect, a method may include a UE determining that a lower layer failure occurred during a mobility registration and periodic update (MRU) procedure being performed for initiating an emergency PDU session with a network for establishing an emergency call. The method may also include the UE, response to the determining, performing one or more operations comprising including UE non-access-stratum (NAS) layer in a 5th Generation Mobility Management (5GMM) protocol stack informing one or more upper layers of the 5GMM protocol stack of a failure of the MRU procedure for accessing the network such that an upper layer of the 5GMM protocol stack initiates a mechanism for remedying the failure, or performing a local de-registration and attempting to initiate an initial registration for emergency services with the network. For example, the upper layer of the 5GMM protocol stack may implement one or more procedures that result in an emergency call being attempted to an additional network, such as an IP-CAN.

In another aspect, a method may include a UE determining that a lower layer failure occurred during a service request (SR) procedure being performed for initiating an emergency PDU session with a network for establishing an emergency call. The method may also include the UE, response to the determining, performing one or more operations comprising a UE NAS layer in a 5GMM protocol stack informing one or more upper layers of the 5GMM protocol stack of a failure of the SR procedure for accessing the network such that an upper layer of the 5GMM protocol stack initiates a mechanism for remedying the failure, or performing a local de-registration and attempting to initiate an initial registration for emergency services with the network. For example, the upper layer of the 5GMM protocol stack may implement one or more procedures that result in an emergency call being attempted to an additional network, such as an IP-CAN.

It is noteworthy that, although the description provided herein may be in the context of certain radio access technologies, networks, and network topologies such as 5G/NR/Beyond Fifth-Generation (B5G) mobile communications, the proposed concepts, schemes and any variation(s)/derivative(s) thereof may be implemented in, for and by other types of radio access technologies, networks and network topologies such as, for example and without limitation, Long-Term Evolution (LTE), LTE-Advanced, LTE-Advanced Pro, Internet-of-Things (IoT), Narrow Band Internet of Things (NB-IoT), Industrial Internet of Things (IIoT), vehicle-to-everything (V2X), and non-terrestrial network (NTN) communications. Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation in order to clearly illustrate the concept of the present disclosure.
FIG. 1 is a diagram of an example network environment in which various solutions and schemes in accordance with the present disclosure may be implemented.
FIG. 2 is a block diagram of an example communication system in accordance with an implementation of the present disclosure.
FIG. 3 is a flowchart of a first example process in accordance with an implementation of the present disclosure.
FIG. 4 is a flowchart of a second example process in accordance with an implementation of the present disclosure.

### DETAILED DESCRIPTION OF PREFERRED IMPLEMENTATIONS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to UE behavior for emergency services failure due to lower layer failure. According to the present disclosure, a number of possible solutions may be implemented separately or jointly. That is, although these possible solutions may be described below separately, two or more of these possible solutions may be implemented in one combination or another.

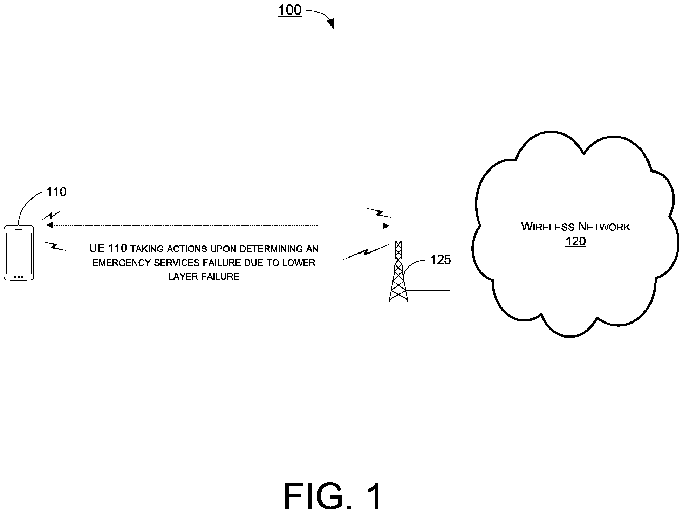

FIG. 1 illustrates an example network environment 100 in which various solutions and schemes in accordance with the present disclosure may be implemented. Referring to FIG. 1, network environment 100 may involve a UE 110 in wireless communication with a wireless network 120 (e.g., a 5G NR mobile network) as part of a communication network. The wireless network 120 may be a public land mobile network (PLMN). UE 110 may initially be in wireless communication with wireless network 120 via a base station or network node 125 (e.g., an eNB, gNB or transmit-receive point (TRP)). In network environment 100, UE 110 and the wireless network 120 may implement various schemes pertaining to UE behavior for emergency services failure due to lower layer failure in accordance with the present disclosure, as described herein. As used herein, a lower layer may refer to a layer in the 5th Generation Mobility Management (5GMM) protocol stack that is lower than the RRC layer, such as a packet data convergence protocol (PDCP) layer, a radio control link (RLC) layer, a medium access control (MAC) layer, a physical (PHY) layer, or so forth.

The current 3GPP specification does not comprehensively outline the procedures a UE should follow during such a lower layer failure. For example, when an MRU or SR procedure is triggered to establish an emergency PDU session and the procedure fails abnormally due to a lower layer failure, the specification does not specify the release of the NAS signaling connection or that the lower layer should indicate that the RRC connection has been suspended without a cell change. Instead, the current 3GPP specification mentions that the procedure will be aborted, and the registration attempt counter will not be incremented in case of an emergency PDU session. However, it is not clear whether the NAS should inform an upper layer about the MRU or SR failure that is triggered for establishing the emergency PDU session.

Additionally, in the MRU case, the specification does not specify that the registration attempt counter is incremented, which means that the counter will never reach the value 5. The registration attempt counter reaching the value 5 would allow the UE to start PLMN selection to find a network cell (e.g., network node) where registration may succeed. In the SR case, the specification does not specify that a service attempt counter is maintained for lower layer failure cases. Further, UE behavior is not clearly defined for when SR fails due to lower layer failure when SR is triggered to establish an emergency PDU session.

Under a first proposed scheme in accordance with the present disclosure, the UE 110 may determine that a lower layer failure occurred during an MRU procedure being performed for initiating an emergency PDU session with a network, such as the wireless network 120, for establishing an emergency call. In such a scenario, the UE 110 may perform one or more operations to remedy the failure. In a first operation, a UE non-access-stratum (NAS) layer in the 5GMM protocol stack as implemented in the UE 110 may inform one or more upper layers of the 5GMM protocol of a failure of the MRU procedure for accessing the network, such that an upper layer of the 5GMM protocol stack initiates a mechanism for remedying the failure. For example, the upper layer may implement procedures specified in 3GPP TS 24.229 that result in an emergency call being attempted to another network, such as an Internet Protocol-connectivity access network (IP-CAN).

In a second operation, the UE 110 may perform a local de-registration (if not de-registered already), and then further attempt to initiate an initial registration for emergency services with the network. It will be appreciated that in some implementations, the first and the second operations may be performed in the alternative.

In a third operation, the UE 110 may perform a local de-registration (if not de-registered already), and then attempt an initial registration procedure with the wireless network 120 to establish the emergency PDU session in the network or an equivalent network.

In a fourth operation, the UE 110 may attempt to select an Evolved Universal Mobile Telecommunications System (UMTS) Terrestrial Radio Access (E-UTRA) cell connected to an Evolved Packet Core (EPC) or a 5th Generation Core Network (5GCN) of the network.

In a fifth operation, the UE 110 may increment a registration attempt counter and start a PLMN search when the registration attempt counter value equals a predetermined value, such as the value 5.

In a sixth operation, the UE 110 may increment the registration attempt counter but use a smaller value than the previous predetermined value (e.g., value 5) as the value that triggers another search for the PLMN after the UE 110 starts a PLMN search to enable a faster access to emergency service.

In a seventh operation, the UE 110 may use an MRU reattempt timer that is shorter than the current 3GPP T3511 timer specified in the 3GPP specification (e.g., 10 seconds) as the timer for reattempting the MRU. Alternatively, the UE 110 may retry the MRU immediately to achieve faster registration. It will be appreciated that one or more of the fifth, sixth, and seventh operations may be implemented in combination.

Under a second proposed scheme in accordance with the present disclosure, the UE 110 may determine that a lower layer failure occurred during an SR procedure being performed for initiating an emergency PDU session with a network, such as the wireless network 120, for establishing an emergency call. In such a scenario, the UE 110 may perform one or more operations to remedy the failure. In a first operation, a UE non-access-stratum (NAS) layer in the 5GMM protocol stack as implemented in the UE 110 may inform one or more upper layers of the 5GMM protocol of a failure of the SR procedure for accessing the network, such that an upper layer of the 5GMM protocol stack initiates a mechanism for remedying the failure. For example, the upper layer may implement procedures specified in 3GPP TS 24.229 that result in an emergency call being attempted to another network, such as an Internet Protocol-connectivity access network (IP-CAN).

In a second operation, the UE 110 may perform a local de-registration (if not de-registered already), and then further attempt to initiate an initial registration for emergency services with the network. It will be appreciated that in some implementations, the first and the second operations may be performed in the alternative.

In a third operation, the UE 110 may perform a local de-registration (if not de-registered already), and then attempt an initial registration procedure with the network to establish the emergency PDU session in the network or an equivalent network.

In a fourth operation, the UE 110 may attempt to select an Evolved Universal Mobile Telecommunications System (UMTS) Terrestrial Radio Access (E-UTRA) cell connected to an Evolved Packet Core (EPC) or a 5th Generation Core Network (5GCN) of the network.

In a fifth operation, the UE 110 may increment a service attempt counter and start a PLMN search when the registration attempt counter value equals a predetermined value, such as the value 5.

In a sixth operation, the UE 110 may increment the service attempt counter but use a smaller value than the previous predetermined value (e.g., value 5) as a trigger value that triggers another search for the PLMN after the UE 110 starts a PLMN search to enable faster access to emergency service. It will be appreciated that the fifth and sixth operations may be implemented in combination.

### Illustrative Implementations

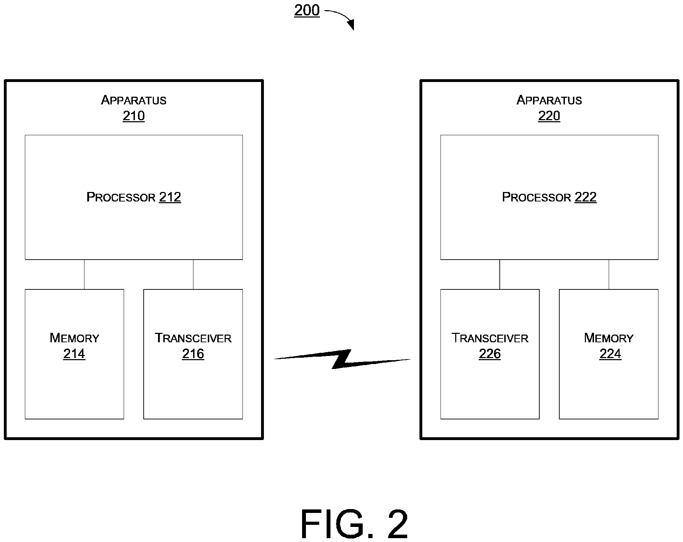

FIG. 2 illustrates an example communication system 200 having at least an example apparatus 210 and an example apparatus 220 in accordance with an implementation of the present disclosure. Each of apparatus 210 and apparatus 220 may perform various functions to implement schemes, techniques, processes and methods described herein pertaining to UE behavior for emergency services failure due to lower layer failure, including the various schemes described above with respect to various proposed designs, concepts, schemes, systems and methods described above, including network environment 100, as well as processes described below.

Each of apparatus 210 and apparatus 220 may be a part of an electronic apparatus, which may be a network apparatus or a UE (e.g., UE 110), such as a portable or mobile apparatus, a wearable apparatus, a vehicular device or a vehicle, a wireless communication apparatus or a computing apparatus. For instance, each of apparatus 210 and apparatus 220 may be implemented in a smartphone, a smart watch, a personal digital assistant, an electronic control unit (ECU) in a vehicle, a digital camera, or a computing equipment such as a tablet computer, a laptop computer or a notebook computer. Each of apparatus 210 and apparatus 220 may also be a part of a machine type apparatus, which may be an IoT apparatus such as an immobile or a stationary apparatus, a home apparatus, a roadside unit (RSU), a wire communication apparatus or a computing apparatus. For instance, each of apparatus 210 and apparatus 220 may be implemented in a smart thermostat, a smart fridge, a smart door lock, a wireless speaker or a home control center. When implemented in or as a network apparatus, apparatus 210 and/or apparatus 220 may be implemented in an eNodeB in an LTE, LTE-Advanced or LTE-Advanced Pro network or in a gNB or TRP in a 5G network, an NR network, or an loT network.

In some implementations, each of apparatus 210 and apparatus 220 may be implemented in the form of one or more integrated-circuit (IC) chips such as, for example and without limitation, one or more single-core processors, one or more multi-core processors, one or more complex-instruction-set-computing (CISC) processors, or one or more reduced-instruction-set-computing (RISC) processors. In the various schemes described above, each of apparatus 210 and apparatus 220 may be implemented in or as a network apparatus or a UE. Each of apparatus 210 and apparatus 220 may include at least some of those components shown in FIG. 2 such as a processor 212 and a processor 222, respectively, for example. Each of apparatus 210 and apparatus 220 may further include one or more other components not pertinent to the proposed scheme of the present disclosure (e.g., internal power supply, display device and/or user interface device), and, thus, such component(s) of apparatus 210 and apparatus 220 are neither shown in FIG. 2 nor described below in the interest of simplicity and brevity.

In one aspect, each of processor 212 and processor 222 may be implemented in the form of one or more single-core processors, one or more multi-core processors, or one or more CISC or RISC processors. That is, even though a singular term "a processor" is used herein to refer to processor 212 and processor 222, each of processor 212 and processor 222 may include multiple processors in some implementations and a single processor in other implementations in accordance with the present disclosure. In another aspect, each of processor 212 and processor 222 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 212 and processor 222 is a special-purpose machine specifically designed, arranged, and configured to perform specific tasks including those pertaining to UE behavior for UE behavior for emergency services failure due to lower layer failure in accordance with various implementations of the present disclosure.

In some implementations, apparatus 210 may also include a transceiver 216 coupled to processor 212. Transceiver 216 may be capable of wirelessly transmitting and receiving data. In some implementations, transceiver 216 may be capable of wirelessly communicating with different types of wireless networks of different radio access technologies (RATs). In some implementations, transceiver 216 may be equipped with a plurality of antenna ports (not shown) such as, for example, four antenna ports. That is, transceiver 216 may be equipped with multiple transmit antennas and multiple receive antennas for multiple-input multiple-output (MIMO) wireless communications. In some implementations, apparatus 220 may also include a transceiver 226 coupled to processor 222. Transceiver 226 may include a transceiver capable of wirelessly transmitting and receiving data. In some implementations, transceiver 226 may be capable of wirelessly communicating with different types of UEs/wireless networks of different RATs. In some implementations, transceiver 226 may be equipped with a plurality of antenna ports (not shown) such as, for example, four antenna ports. That is, transceiver 226 may be equipped with multiple transmit antennas and multiple receive antennas for MIMO wireless communications.

In some implementations, apparatus 210 may further include a memory 214 coupled to processor 212 and capable of being accessed by processor 212 and storing data therein. In some implementations, apparatus 220 may further include a memory 224 coupled to processor 222 and capable of being accessed by processor 222 and storing data therein. Each of memory 214 and memory 224 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 214 and memory 224 may include a type of read-only memory (ROM) such as mask ROM, programmable ROM (PROM), erasable programmable ROM (EPROM) and/or electrically erasable programmable ROM (EEPROM). Alternatively, or additionally, each of memory 214 and memory 224 may include a type of non-volatile random-access memory (NVRAM) such as flash memory, solid-state memory, ferroelectric RAM (FeRAM), magnetoresistive RAM (MRAM) and/or phase-change memory.

Each of apparatus 210 and apparatus 220 may be a communication entity capable of communicating with each other using various proposed schemes in accordance with the present disclosure. For illustrative purposes and without limitation, a description of capabilities of apparatus 210, as a UE (e.g., UE 110), and apparatus 220, as a network node (e.g., network node 125) of a network (e.g., wireless network 120 as a 5G/NR mobile network), is provided below.

Under one proposed scheme in accordance with the present disclosure pertaining to UE behavior for emergency services failure due to lower layer failure, processor 212 of apparatus 210, implemented in or as UE 110, may determine that a lower layer failure occurred during an MRU procedure being performed for initiating an emergency PDU session with a network for establishing an emergency call. Moreover, responsive to the determining, processor 212 may perform one or more operations including a UE NAS layer in a 5GMM protocol stack of the UE 110 informing one or more upper layers of the 5GMM protocol stack of a failure of the MRU procedure for accessing the network such that an upper layer of the 5GMM protocol stack initiates a mechanism for remedying the failure, or performing a local de-registration (if not de-registered already) and attempting to initiate an initial registration for emergency services with the network. For example, the upper layer of the 5GMM protocol stack may implement one or more procedures that result in an emergency call being attempted to an additional network, such as an IP-CAN.

In some implementations, the one or more operations may further comprise performing a local de-registration (if not de-registered already) and attempting an initial registration procedure to establish the emergency PDU session in the network or an equivalent network. For example, the network or the equivalent network may be a PLMN.

In some implementations, the one or more operations may further comprise selecting an E-UTRA cell connected to an EPC or a 5GCN of the network.

In some implementations, the one or more operations may further comprise incrementing a registration attempt counter and starting a PLMN search when the registration attempt counter value equals a predetermined value. For example, the predetermined value may be a value of 5.

In some implementations, the one or more operations may further comprise using a smaller value than the predetermined value as a trigger value that triggers another search for a PLMN after the UE 110 starts the PLMN search and incrementing the registration attempt counter.

In some implementations, the one or more operations may further comprise using an MRU reattempt timer that is shorter than a current 3GPP T3511 timer as a timer for reattempting the MRU or retrying the MRU immediately.

Under another proposed scheme in accordance with the present disclosure, processor 212 of apparatus 210, implemented in or as UE 110, may determine that a lower layer failure occurred during an SR procedure being performed for initiating an emergency PDU session with a network for establishing an emergency call. Moreover, responsive to the determining, processor 212 may perform one or more operations including a UE NAS layer in a 5GMM protocol stack of the UE 110 informing one or more upper layers of the 5GMM protocol stack of a failure of the SR procedure for accessing the network such that an upper layer of the 5GMM protocol stack initiates a mechanism for remedying the failure, or performing a local de-registration (if not de-registered already) and attempting to initiate an initial registration for emergency services with the network. For example, the upper layer of the 5GMM protocol stack may implement one or more procedures that result in an emergency call being attempted to an additional network, such as an IP-CAN.

In some implementations, the one or more operations may further comprise performing a local de-registration (if not de-registered already) and attempting an initial registration procedure to establish the emergency PDU session in the network or an equivalent network. For example, the network or the equivalent network may be a PLMN.

In some implementations, the one or more operations may further comprise selecting an E-UTRA cell connected to an EPC or a 5GCN of wireless the network.

In some implementations, the one or more operations may further comprise incrementing a registration attempt counter and starting a PLMN search when the registration attempt counter value equals a predetermined value. For example, the predetermined value may be a value of 5.

In some implementations, the one or more operations may further comprise using a smaller value than the predetermined value as a trigger value that triggers another search for a PLMN after the UE 110 starts the PLMN search and increments the registration attempt counter.

### Illustrative Processes

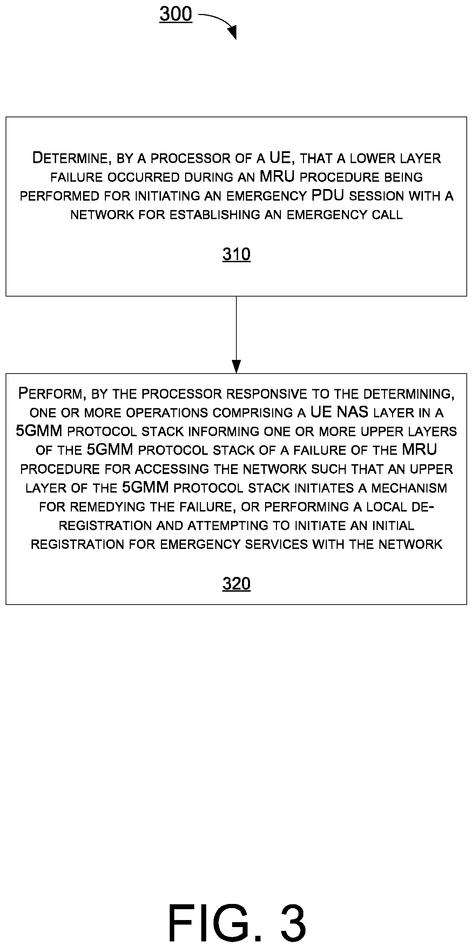

FIG. 3 illustrates an example process 300 in accordance with an implementation of the present disclosure. Process 300 may represent an aspect of implementing various proposed designs, concepts, schemes, systems, and methods described above, whether partially or entirely, including those pertaining to those described above. More specifically, process 300 may represent an aspect of the proposed concepts and schemes pertaining to UE behavior for emergency services failure due to lower layer failure. Process 300 may include one or more operations, actions, or functions as illustrated by one or more of blocks 310 and 320. Although illustrated as discrete blocks, various blocks of process 300 may be divided into additional blocks, combined into fewer blocks, or eliminated, depending on the desired implementation. Moreover, the blocks/sub-blocks of process 300 may be executed in the order shown in FIG. 3 or, alternatively in a different order. Furthermore, one or more of the blocks/sub-blocks of process 300 may be executed iteratively. Process 300 may be implemented by or in apparatus 210 and apparatus 220 as well as any variations thereof. Solely for illustrative purposes and without limiting the scope, process 300 is described below in the context of apparatus 210 as a UE (e.g., UE 110) and apparatus 220 as a communication entity such as a network node or base station (e.g., network node 125) of a network (e.g., wireless network 120). Process 300 may begin at block 310.

At 310, process 300 may involve processor 212 of apparatus 210 determining that a lower layer failure occurred during an MRU procedure being performed for initiating an emergency PDU session with the network for establishing an emergency call. Process 300 may proceed from 310 to 320.

At 320, process 300 may involve processor 212 performing, responsive to the determining, one or more operations. In some implementations, the one or more operations may comprise a UE NAS layer in a 5GMM protocol stack of the apparatus 210 informing one or more upper layers of the 5GMM protocol stack of a failure of the MRU procedure for accessing the network such that an upper layer of the 5GMM protocol stack initiates a mechanism for remedying the failure, or performing a local de-registration (if not de-registered already) and attempting to initiate an initial registration for emergency services with the network. For example, the upper layer of the 5GMM protocol stack may implement one or more procedures that result in an emergency call being attempted to an additional network, such as an IP-CAN.

In some implementations, the one or more operations may further comprise performing a local de-registration (if not de-registered already) and attempting an initial registration procedure to establish the emergency PDU session in the network or an equivalent network. For example, the network or the equivalent network may be a PLMN.

In some implementations, the one or more operations may further comprise selecting an E-UTRA cell connected to an EPC or a 5GCN of the network.

In some implementations, the one or more operations may further comprise incrementing a registration attempt counter and starting a PLMN search when the registration attempt counter value equals a predetermined value. For example, the predetermined value may be a value of 5.

In some implementations, the one or more operations may further comprise using a smaller value than the predetermined value as a trigger value that triggers another search for a PLMN after the apparatus 210 starts the PLMN search and increments the registration attempt counter.

In some implementations, the one or more operations may further comprise using an MRU reattempt timer that is shorter than a current 3GPP T3511 timer as a timer for reattempting the MRU or retrying the MRU immediately.

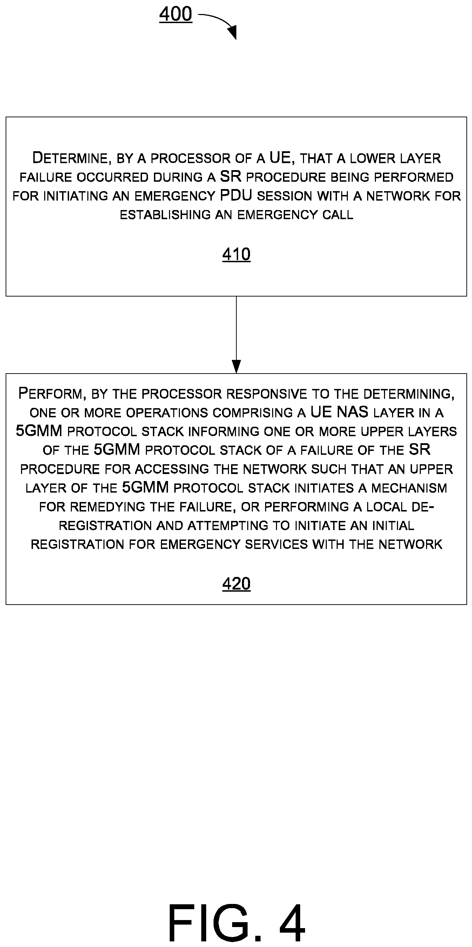

FIG. 4 illustrates an example process 400 in accordance with an implementation of the present disclosure. Process 400 may represent an aspect of implementing various proposed designs, concepts, schemes, systems, and methods described above, whether partially or entirely, including those pertaining to those described above. More specifically, process 400 may represent an aspect of the proposed concepts and schemes pertaining to UE behavior for emergency services failure due to lower layer failure. Process 400 may include one or more operations, actions, or functions as illustrated by one or more of blocks 410 and 420. Although illustrated as discrete blocks, various blocks of process 400 may be divided into additional blocks, combined into fewer blocks, or eliminated, depending on the desired implementation. Moreover, the blocks/sub-blocks of process 400 may be executed in the order shown in FIG. 4 or, alternatively in a different order. Furthermore, one or more of the blocks/sub-blocks of process 400 may be executed iteratively. Process 400 may be implemented by or in apparatus 210 and apparatus 220 as well as any variations thereof. Solely for illustrative purposes and without limiting the scope, process 400 is described below in the context of apparatus 210 as a UE (e.g., UE 110) and apparatus 220 as a communication entity such as a network node or base station (e.g., network node 125) of a network (e.g., wireless network 120). Process 400 may begin at block 410.

At 410, process 400 may involve processor 212 of apparatus 210 determining that a lower layer failure occurred during an SR procedure being performed for initiating an emergency PDU session with the network for establishing an emergency call. Process 400 may proceed from 410 to 420.

At 420, process 400 may involve processor 212 performing, responsive to the determining, one or more operations. In some implementations, the one or more operations may comprise a UE NAS layer in a 5GMM protocol stack of the apparatus 210 informing one or more upper layers of the 5GMM protocol stack of a failure of the SR procedure for accessing the network such that an upper layer of the 5GMM protocol stack initiates a mechanism for remedying the failure, or performing a local de-registration (if not de-registered already) and attempting to initiate an initial registration for emergency services with the network. For example, the upper layer of the 5GMM protocol stack may implement one or more procedures that result in an emergency call being attempted to an additional network, such as an IP-CAN.

In some implementations, the one or more operations may further comprise performing a local de-registration (if not de-registered already) and attempting an initial registration procedure to establish the emergency PDU session in the network or an equivalent network. For example, the network or the equivalent network may be a PLMN.

In some implementations, the one or more operations may further comprise selecting an E-UTRA cell connected to an EPC or a 5GCN of the network.

In some implementations, the one or more operations may further comprise incrementing a registration attempt counter and starting a PLMN search when the registration attempt counter value equals a predetermined value. For example, the predetermined value may be a value of 5.

In some implementations, the one or more operations may further comprise using a smaller value than the predetermined value as a trigger value that triggers another search for a PLMN after the apparatus 210 starts the PLMN search and increments the registration attempt counter.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

## Claims

1. A method, comprising:
determining, by a processor of a user equipment, in the following also referred to as UE, that a lower layer failure occurred during a mobility and periodic registration update, in the following also referred to as MRU, procedure being performed for initiating an emergency PDU session with a network for establishing an emergency call (310); and
performing, by the processor responsive to the determining, one or more operations (320),
wherein the one or more operations comprise a UE non-access-stratum, in the following also referred to as NAS, layer in a 5th Generation Mobility Management, in the following also referred to as 5GMM, protocol stack informing one or more upper layers of the 5GMM protocol stack of a failure of the MRU procedure for accessing the network such that an upper layer of the 5GMM protocol stack initiates a mechanism for remedying the failure, or performing a local de-registration and attempting to initiate an initial registration for emergency services with the network.

2. The method of Claim 1, wherein the upper layer of the 5GMM protocol stack implements one or more procedures that result in an emergency call being attempted to an additional network.

3. The method of Claim 2, wherein the additional network is an Internet Protocol-connectivity access network, in the following also referred to as IP-CAN.

4. The method of any one of Claims 1 to 3, wherein the one or more operations further comprise performing a local de-registration and attempting an initial registration procedure to establish the emergency PDU session in the network or an equivalent network.

5. The method of Claim 4, wherein the network or the equivalent network is a public land mobile network, in the following also referred to as PLMN.

6. The method of any one of Claims 1 to 5, wherein the one or more operations further comprise selecting an Evolved Universal Mobile Telecommunications System, in the following also referred to as UMTS, Terrestrial Radio Access, in the following also referred to as E-UTRA, cell connected to an Evolved Packet Core, in the following also referred to as EPC, or a 5th Generation Core Network, in the following also referred to as 5GCN, of the network.

7. The method of any one of Claims 1 to 6, wherein the one or more operations further comprise incrementing a registration attempt counter and starting a PLMN search when the registration attempt counter value equals a predetermined value.

8. The method of Claim 7, wherein the predetermined value is a value of 5.

9. The method of Claim 7 or 8, wherein one or more operations further comprise using a smaller value than the predetermined value as a trigger value that triggers another search for a PLMN after the UE starts the PLMN search and incrementing the registration attempt counter.

10. The method of any one of Claims 1 to 9, wherein the one or more operations further comprise using an MRU reattempt timer that is shorter than a current 3GPP T3511 timer as a timer for reattempting the MRU or retrying the MRU immediately.

11. A method, comprising:
determining, by a processor of a user equipment, in the following also referred to as UE, that a lower layer failure occurred during a service request, in the following also referred to as SR, procedure being performed for initiating an emergency PDU session with a network for establishing an emergency call (410);
performing, by the processor responsive to the determining, one or more operations (420),
wherein the one or more operations comprise a UE non-access-stratum, in the following also referred to as NAS, layer in a 5th Generation Mobility Management, in the following also referred to as 5GMM, protocol stack informing one or more upper layers of the 5GMM protocol stack of a failure of the SR procedure for accessing the network such that an upper layer of the 5GMM protocol stack initiates a mechanism for remedying the failure, or performing a local de-registration and attempting to initiate an initial registration for emergency services with the network (420).

12. The method of Claim 11, wherein the upper layer of the 5GMM protocol stack implements one or more procedures that result in an emergency call being attempted to an additional network.

13. The method of Claim 11 or 12, wherein the one or more operations further comprise performing a local de-registration and attempting an initial registration procedure to establish the emergency PDU session in the network or an equivalent network.

14. The method of any one of Claims 11 to 13, wherein the one or more operations further comprise selecting an Evolved Universal Mobile Telecommunications System, in the following also referred to as UMTS, Terrestrial Radio Access, in the following also referred to as E-UTRA, cell connected to an Evolved Packet Core, in the following also referred to as EPC, or a 5th Generation Core Network, in the following also referred to as 5GCN, of the network.
